# EUROPEAN PATENT SPECIFICATION

(11) **EP 1 120 304 B1**
(45) Date of publication and mention of the grant of the patent: **21.11.2007**
(21) Application number: 01200260.6
(22) Date of filing: 24.01.2001
(51) Int. Cl.: B60J 7/00

(54) **Open roof construction for a vehicle, as well as a sunscreen for use therein**
Konstruktion eines öffnungsfähigen Fahrzeugsdaches sowie Sonnenblende zur Verwendung darin
Construction de toit ouvrant pour véhicule ainsi que pare-soleil utilisé dans ce toit

(30) Priority: 24.01.2000 NL 1014154
(43) Date of publication of application: 01.08.2001
(73) Proprietor: Inalfa Roof Systems Group B.V., 5804 AH Venray (NL)
(72) Inventor: Manders, Peter Christiaan Leonardus Johannes, 5961 SM Horst (NL); Boersma, Egbert, 5708 CR Helmond (NL)
(74) Representative: Metman, Karel Johannes

(56) References cited:
- US-A- 4 717 200

## Description

The present invention relates to an open roof construction for a vehicle.

Open roof constructions of this kind are known in several versions thereof. Examples are to be found in DE-A-29 23 888, US-A-4,717,200, DE-C-195 11 067, DE-C-195 19 811 and DE-A-198 21 358. Claim 1 has been delimited from DE-A-29 23 888.

DE-A-198 21 358 discloses an open roof construction including a sun screen. The sun screen includes a ventilation strip which is provided with several ventilation channels.

DE-C-195 19 811 discloses an open roof construction including a sun screen in the form of a slidable, substantially rigid screen. The sun screen comprises a ventilating opening for passing air through the screen.

The object of the invention is to provide a new and improved open roof construction of the kind referred to in the introduction.

In order to accomplish that objective, the open roof construction according to the invention comprises the features of the characterising portion of claim 1.

The invention provides a screen which does pass air, and consequently provides ventilation, but which allows hardly any incidence of light, if at all, at least no direct incidence of light. Preferably, the overlapping parts of the screen are formed in such a manner that a shaded edge is formed on the underside of the screen in use, at the location of said overlapping parts, rather than patches of light, as is the case with the prior art where the overlapping parts are discontinuous or interrupted.

The overlapping parts can be formed by making the screen double-walled, with an upper part and a lower part, and by giving said parts different dimensions and having them overlap at least partially. The overlapping parts can form a ventilating gap which is covered from the upper side, which ventilating gap extends in the longitudinal direction of the screen or transversely thereto. According to another possibility, the ventilating gap extends along the entire circumference of the screen. The ventilating openings may adjoin said gap between the upper part and the lower part in that case, they may for example be disposed near the front edge and the rear edge of the screen. The ventilating openings may be formed of separate parts formed of plastic material, for example by means of an injection moulding process, which parts may have been attached to the screen by means of a snap connection, for example, but it is also possible to form larger parts of the screen of preformed material.

The invention will now be explained in more detail with reference to the drawings, which show, in some case very schematically, an embodiment of the invention.

The invention is shown in Figures 1-4 only.
Fig. 1 is a very schematic top plan view of a vehicle roof fitted with an exemplary embodiment of the open roof construction according to the invention.
Fig. 2 is a perspective, longitudinal sectional view of the sun screen of the open roof construction of Fig. 1, seen from above.
Fig. 3 shows half the screen of Fig. 2, seen in bottom plan view in this case.
Fig. 4 is a sectional view along line IV-IV in Fig. 2.
Fig. 5 is a bottom plan view of a variant of a sun screen.
Fig. 6 is a very schematic sectional view along line VI-VI in Fig. 5.
Fig. 7 is a perspective, larger-scale view of a part of the underside of the screen that is shown in Figs. 5 and 6.
Figs. 8 and 9 are a cross-sectional view and a perspective view of details of the side edge of the sun screen of Figs. 6 and 7.
Figs. 10 and 11 are a bottom plan view and a perspective view of another embodiment of a sun screen.
Figs. 12 and 13 are a bottom plan view and a very schematic sectional view of another sun screen, whereas Fig. 14 is a perspective view of a detail thereof.
Figs. 15, 16 and 17 show various elevational views and sectional views, respectively, of another variant, and Figs. 18, 19 and 20 show another sun screen.

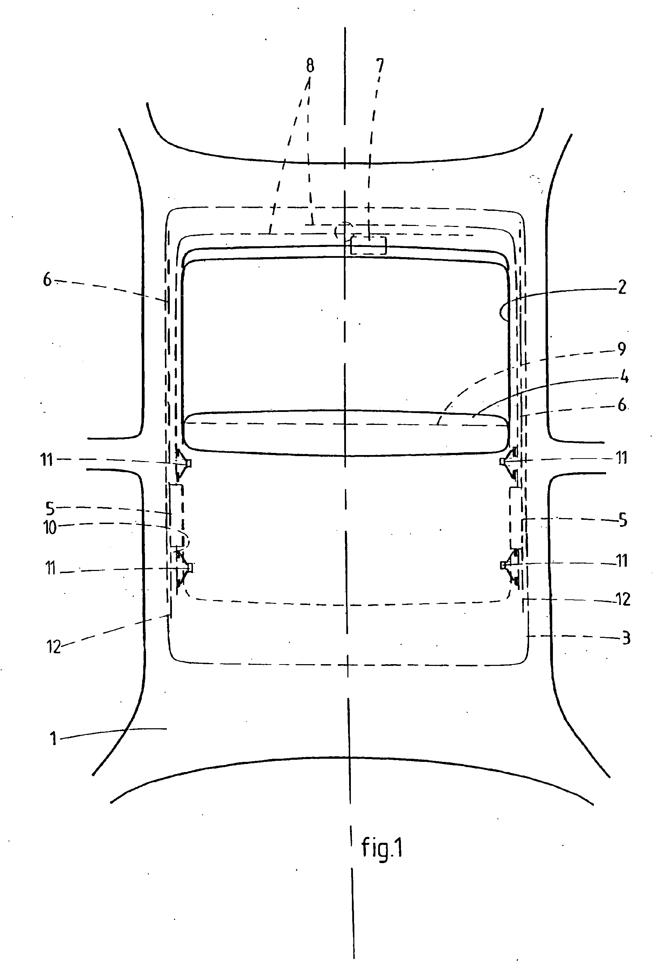

Fig. 1 shows the fixed roof of a motor vehicle, in this case a passenger car. Said fixed roof 1 is provided with an at least substantially rectangular roof opening 2 for the purpose of mounting an open roof construction therein. The open roof construction comprises a stationary part, in this case a frame 3, which is fixed to the underside of the fixed roof 1 of the vehicle.

In the illustrated embodiment the open roof construction is a so-called sliding roof or sliding-tilt roof, which comprises a panel 4 which is preferably transparent and which is more or less rigid in this embodiment, which panel is capable of selectively closing the roof opening 2 or releasing it to a greater or lesser extent. To this end, panel 4 is laterally supported by operating mechanisms 5, which are slidably accommodated in guide rails 6 which are mounted on frame 3 or which form part thereof, and which extend in longitudinal direction, parallel to each other, on either side of roof opening 2 and rearwards thereof. Said operating mechanisms 5 can be moved synchronously in guide rails 6 and thus move the panel not only in longitudinal direction but also in vertical direction. To this end the operating mechanisms 5 are actuated from a driving device 7, such as an electric motor, for example via pull-push cables 8.

Besides panel 4, the open roof construction also comprises a lower closure element, in this case in the form of a sun screen 9, which is slidably guided with its side edges relative to guideways 10 of guide rails 6. Sun screen 9 can be moved forward and rearward, for example manually or automatically, or be moved along with panel 4. Sun screen 9 is fitted with a number of sliding shoes 11, four sliding shoes 11 on each side edge of the sun screen in this embodiment, in order to enable sliding movement of sun screen 9 in guide grooves 10.

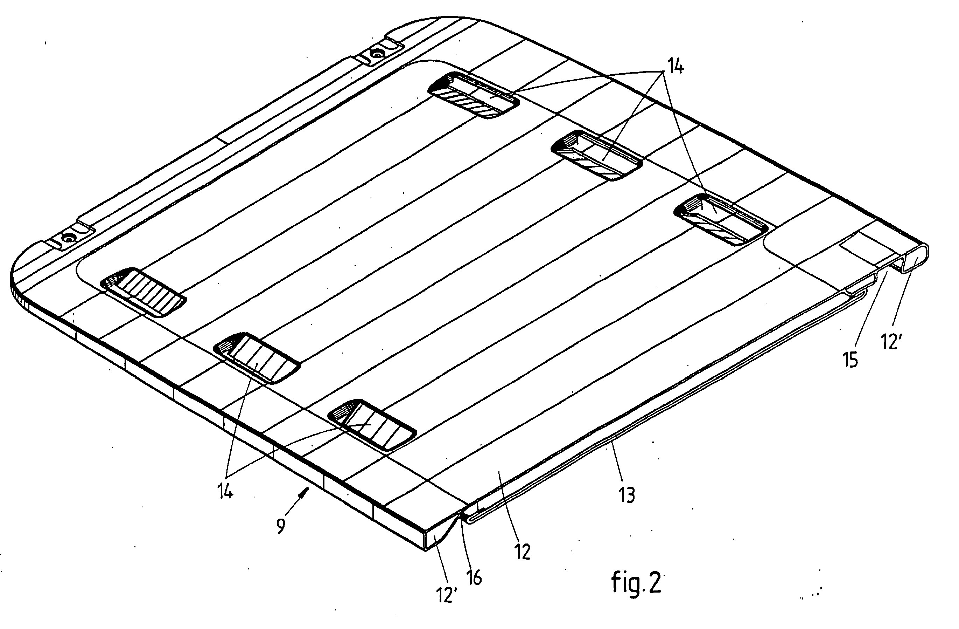

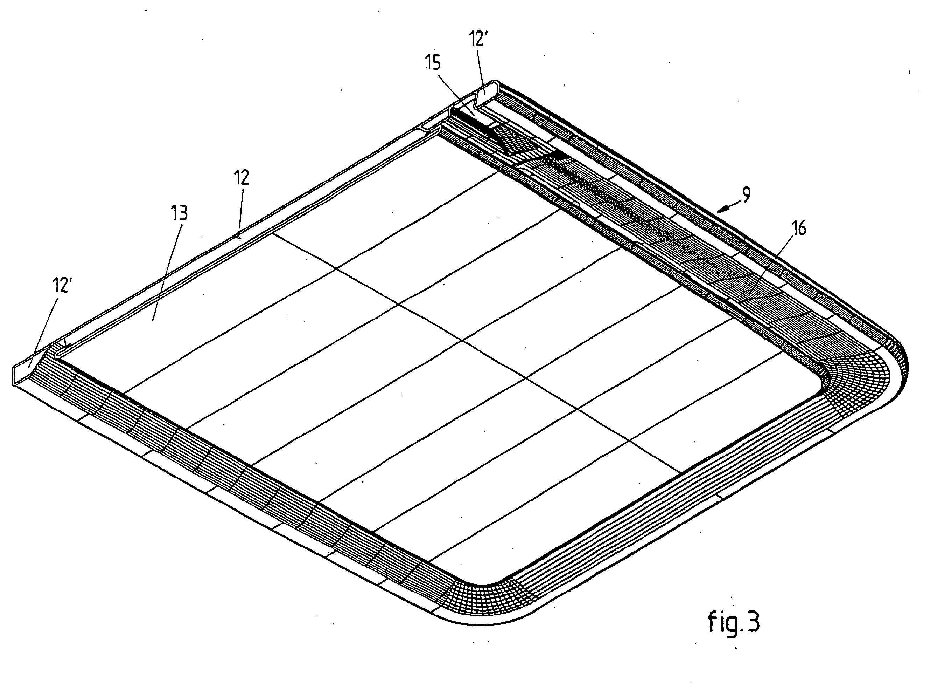

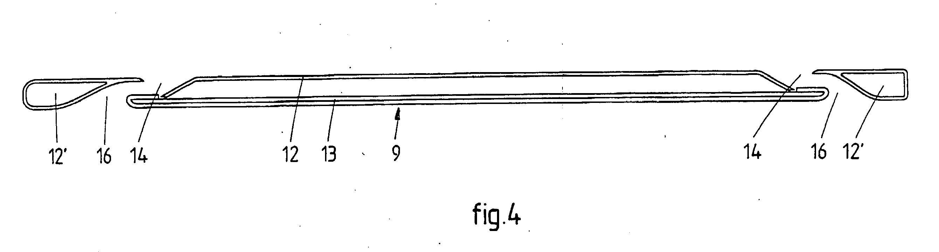

Figs. 2 - 4 show the sun screen 9 in detail. The figures show that the sun screen is double-walled, comprising an upper part 12 and a lower part 13. Upper part 12 is larger than lower part 13, and thus defines the circumference of the sun screen 9. The circumferential edge 12' of upper part 12 is hollow, and it has a thickness such that the bottom side of circumferential edge 12' of upper part 12 is substantially flush with the bottom side of lower part 13. The upper side of upper part 12 is substantially flat and free from any projections. Lower part 13, over which cloth may be stretched, is connected to upper part 12 in a manner not shown, leaving clear a space between the two parts, which is formed as a result of the upper part curving and blending upwards above lower part 13, thus leaving clear a ventilating gap 16 therebetween. Ventilating openings 14 are formed in the upper part 12 of the sun screen 9, near the front edge and the rear edge of sun screen in this case, which ventilating openings open at the bottom side of upper part 12 at a location where lower part 13 overlaps upper part 12. Thus, said ventilating openings 14 are hidden from view to the occupants of the vehicle. The only thing that can be seen is the shaded edge at the circumference of part 13. In this way direct incidence of light into the interior is prevented in the closed position of the sun screen, whereas ventilating through the sun screen 9 is still possible.

The figures furthermore show that a handgrip 15 for manual operation of sun screen 9 is formed in the bottom side of the upper part 12 of sun screen 9, at the front edge thereof. Said handgrip 15 is formed separately from the ventilating openings 14.

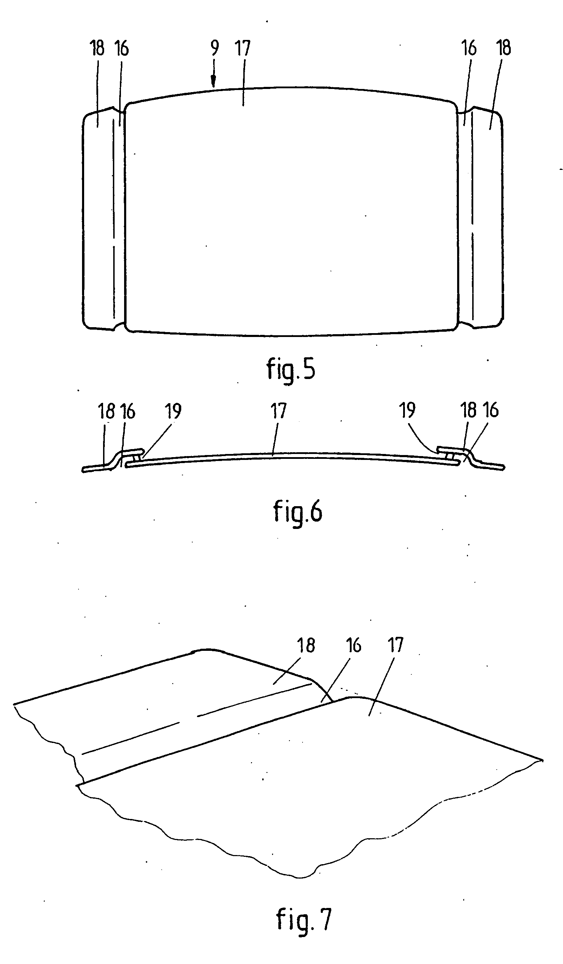

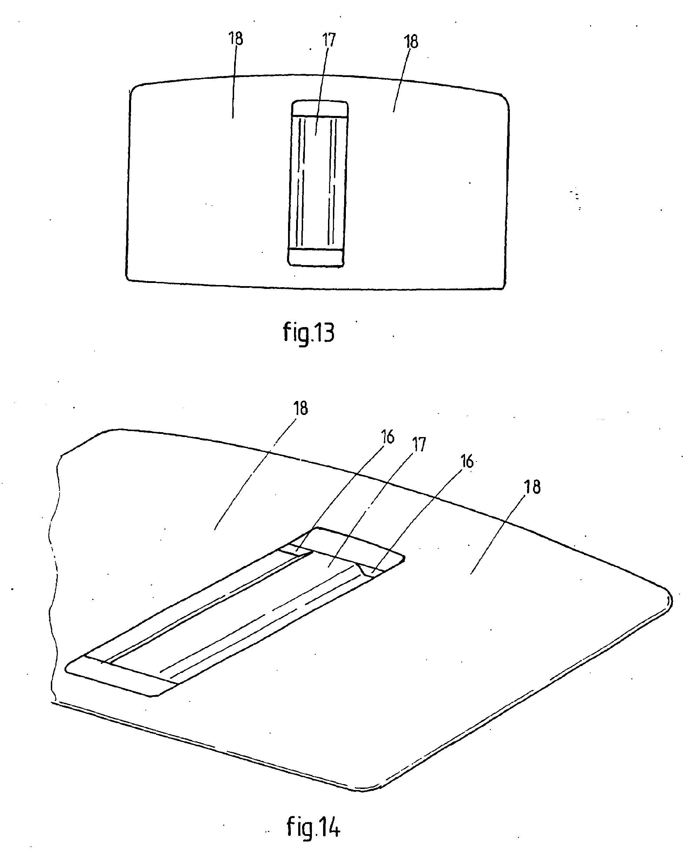

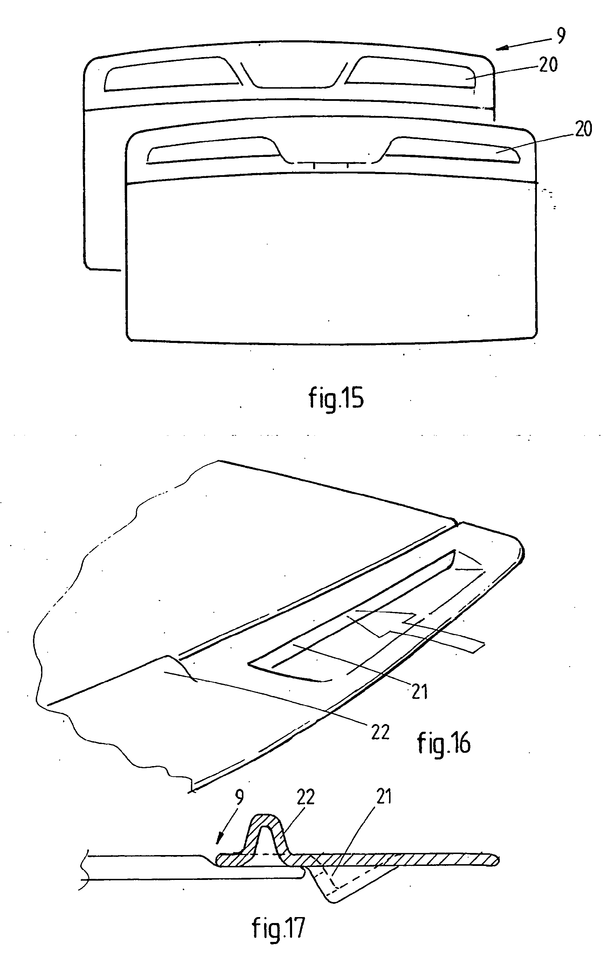

Figs. 5 - 20 show all kinds of variants of an open roof construction, and in particular of the sun screen thereof.

Figs. 5 - 7 show a first variant, wherein the ventilating gap 16 does not extend along the entire circumference of sun screen 9, but only along the side edges thereof. In this very schematic exemplary embodiment, sun screen 9 consists of a central part 17 and two edge parts 18, which slightly overlap said central part 17 on the upper side and wherein the overlapping parts of said central part 17 hide the ventilating openings 19 to be formed from view.

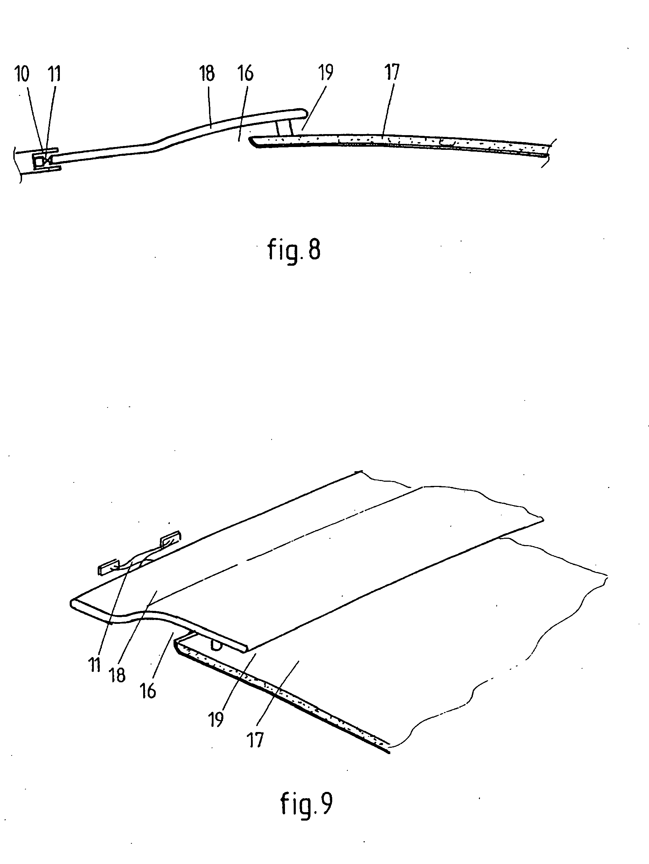

Figs. 8 and 9 are schematic, larger-scale views of an edge part 18, which is fitted with sliding shoes 11, which sliding shoes are thus capable of guiding the movement of sun screen 9 along guideway 10.

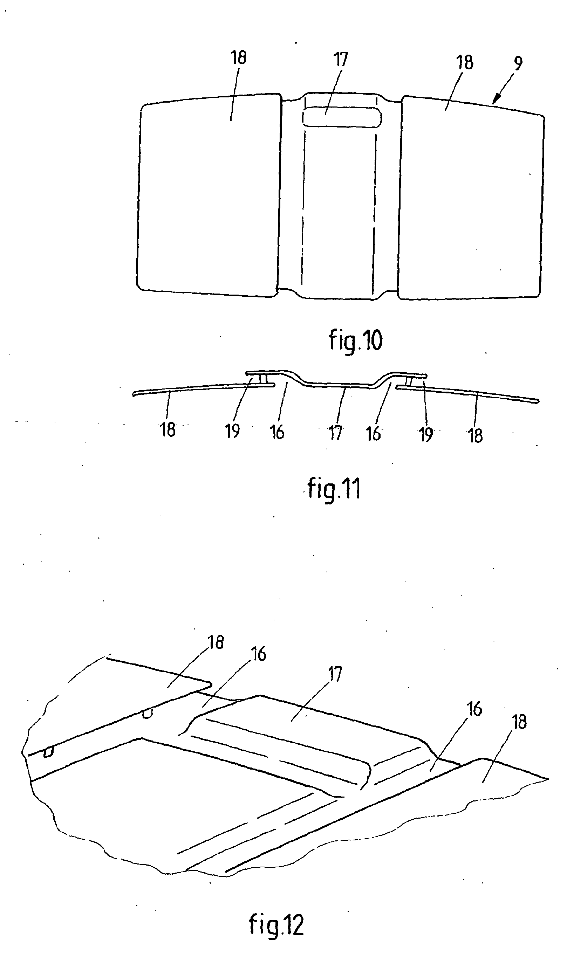

Figs. 10, 11 and 12 show a variant wherein the edge parts 18 are wider, and wherein the central part 17 overlaps the edge parts 18 on the upper side, so that the shaded edges are formed near the central part 17. In this way a central console as present in the roof liner of many automobiles is still formed in the sun screen 9, as it were.

Figs. 13 and 14 show a variant of the preceding embodiment, wherein the two edge parts 18 are interconnected at the front and the rear edge of the sun screen 9, and wherein consequently the ventilating gaps 16 do not extend along the entire length of sun screen 9. In this way a central console is still formed, as it were, but the rigidity of the sun screen 9 as a whole is greater in this case.

Figs. 15, 16 and 17 show another embodiment of a sun screen, wherein a front part 20 of sun screen 9 has been formed of plastic material as a separate part, preferably by means of an injection moulding process. Thus, in those places that are most critical as regards dirt and grease, viz. the front edge of the sun screen, the ventilating openings 21 and the handgrip 22 consist of plastic material, and consequently they are easier to clean. The other parts of the sun screen 9 may be lined with textile, for example, and be adapted to the material of the roof liner of the vehicle in question.

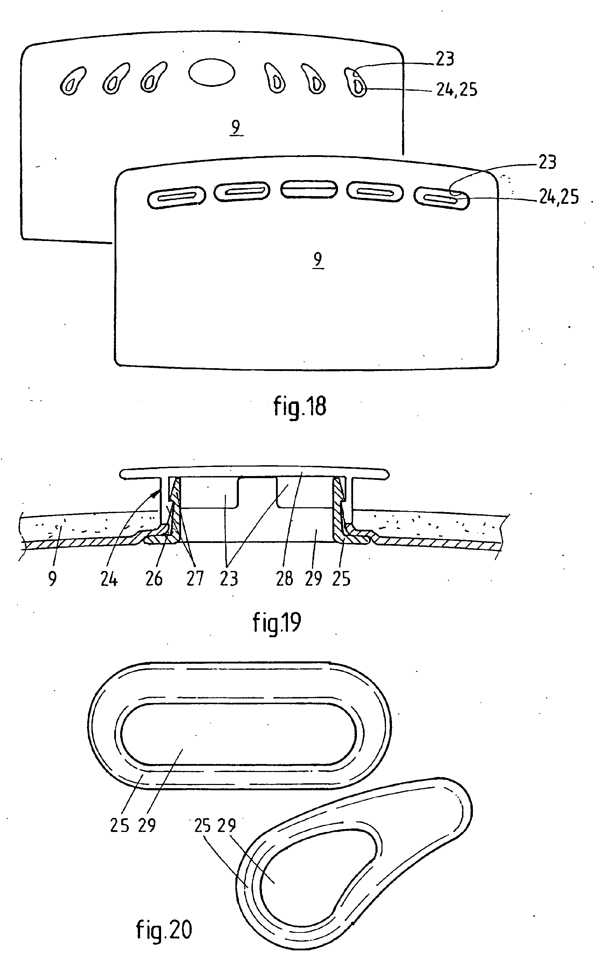

Figs. 18 - 20 show a final exemplary embodiment, wherein the ventilating openings 23 are formed in separate elements, which have been made of plastic material, preferably by means of an injection moulding process. Said elements consist of an upper element 24 and a lower element 25. Lower element 25 can be inserted from below through a suitable opening 26 in sun screen 9, after which the upper element 24 can be connected to lower element 26 by snap means 27 and be attached to sun screen 9. Upper element 24 has a wall 28, which covers the passage 29 through lower element 25, so that there will be no direct incidence of light through sun screen 9. Present in the side walls of the upper element 24 are the ventilating openings 23, which allow air to pass through but which do not allow direct incidence into the interior of the vehicle, owing to the overhanging edge of the upper wall 28 of the upper element 24. The two elements 24 and 25, and of course opening 26 in sun screen 9, can be given any desired shape, as is illustrated in Fig. 18.

It will be apparent from the foregoing that the invention provides an open roof construction which provides adequate ventilating as well as good possibilities of being adapted to the interior of the vehicle.

The invention is not limited to the embodiment as described above and shown in the drawings, which can be varied in several ways without departing from the scope of the invention, as defined by the claims.

## Claims

1. An open roof construction for a vehicle having an opening in its fixed roof (1), comprising a stationary part to be fixed to the roof, an adjustable upper closure element supported by said stationary part, which is adjustable between a closed position, in which it closes the roof opening (2), and an open position, in which it opens the roof opening (2) at least partially, as well as a lower closure element, in particular a sun screen (9) in the form of a slidable, substantially rigid screen which is provided with at least one ventilating opening (14) for passing air through the screen and which comprises horizontally overlapping portions, at least adjacent to said ventilating opening, **characterized in that** said screen is made double-walled with an upper (12, 12') and lower (13) part, which have different dimensions and overlap at least partially to form said horizontally overlapping portions defining a ventilating gap adjacent said at least one ventilation opening (14) to prevent direct incidence of light through the screen.

2. An open roof construction according to claim 1, wherein said screen (9) includes the overlapping parts at least substantially along its entire length and/or width, and/or wherein the overlapping portions extend continuously without interrupting parts and/or wherein the underside of the screen blends into the upper of the overlapping parts.

3. An open roof construction according to claim 2, wherein said overlapping parts extend along the entire circumference of the screen.

4. An open roof construction according to claim 1, wherein at least one ventilating opening (14) is present near the front edge and near the rear edge of the screen (9).

5. An open roof construction according to one of the preceding claims, wherein said screen (9) comprises an upper part (12) and a lower part (13), wherein said upper part (12) is larger than said lower part (13), and wherein the circumferential edge of the screen (9) is formed on said upper part (12) and said upper part (12) is curved in upward direction from said circumferential edge, leaving clear a vertical gap between itself and said lower part (13), whilst the ventilating openings (14) are present in the upper part (12), which ventilating openings (14) adjoin the gap between said upper part (12) and said lower part (13) at a location some distance away from the circumference of said lower part (13).

6. An open roof construction according to claim 5, wherein the underside of the circumferential edge of the upper part (12) is at least substantially flush with the underside of the lower part (13).

7. A screen, in particular a sun screen for use in an open roof construction for a vehicle having an opening in its fixed roof, said screen being in the form of a slidable, substantially rigid screen which is provided with at least one ventilating opening for passing air through the screen and which comprises horizontally overlapping portions, at least adjacent to said ventilating opening, **characterized in that** said screen is made double-walled with an upper and lower part, which have different dimensions and overlap at least partially to form said horizontally overlapping portions defining a ventilating gap adjacent said at least one ventilation opening to prevent direct incidence of light through the screen.

8. A sun screen according to claim 7, wherein the upper side of the screen is substantially flat and free from any upward projections.

## Patentansprüche

1. Offendach-Konstruktion für ein Fahrzeug mit einer Öffnung in dessen Festdach (1), aufweisend einen stationären Teil zur Befestigung an dem Dach, ein verstellbares, von dem stationären Teil gestütztes oberes Schließelement, das zwischen einer Schließposition, in welcher es die Dachöffnung (2) schließt, und einer Offenposition verstellbar ist, in welcher es die Dachöffnung (2) wenigstens teilweise freigibt, sowie ein unteres Schließelement, insbesondere eine Sonnenblende (9) in der Form einer verschiebbaren, im wesentlichen steifen Blende, die mit mindestens einer Ventilationsöffnung (14) zum Hindurchpassieren von Luft durch die Blende hindurch versehen ist und welche sich horizontal überlappende Abschnitte wenigstens benachbart zu der Ventilationsöffnung aufweist, **dadurch gekennzeichnet, dass** die Blende doppelwandig mit einem oberen (12, 12') und einem unteren (13) Teil ausgebildet ist, die unterschiedliche Abmessungen haben und sich wenigstens teilweise überlappen, so dass die sich horizontal überlappenden Abschnitte ausgebildet werden, die eine Ventilationslücke benachbart zu der mindestens einen Ventilationsöffnung (14) definieren, so dass ein direkter Lichteinfall durch die Blende hindurch verhindert wird.

2. Offendach-Konstruktion gemäß Anspruch 1, wobei die Blende (9) die überlappenden Teile wenigstens in wesentlichen entlang ihrer Gesamt-Länge und/oder -Breite aufweist und/oder wobei die überlappenden Abschnitte sich durchgängig ohne Unterbrechungen erstrecken und/oder wobei die Unterseite der Sonnenblende in das Oberteil der überlappenden Teile in die oberen und unteren Teile übergeht.

3. Offendach-Konstruktion gemäß Anspruch 2, wobei die überlappenden Teile sich entlang des Gesamtumfangs der Blende erstrecken.

4. Offendach-Konstruktion gemäß Anspruch 1, wobei mindestens eine Ventilationsöffnung (14) nahe dem Frontrand und nahe dem Hinterrand der Blende (9) vorhanden ist.

5. Offendach-Konstruktion gemäß einem der vorherigen Ansprüche, wobei die Blende (9) einen oberen Teil (12) und einen unteren Teil (13) aufweist, wobei der obere Teil (12) größer als der untere Teil (13) ist und wobei der Umfangsrand der Blende (9) an dem oberen Teil (12) ausgebildet ist und der obere Teil (12) ab dem Umfangsrand in Aufwärtsrichtung gekrümmt ist, was eine Vertikallücke zwischen sich und dem unteren Teil (13) frei lässt, wobei die Ventilationsöffnungen (14) in dem oberen Teil vorhanden sind, welche Ventilationsöffnungen (14) an die Lücke zwischen dem oberen Teil (12) und dem unteren Teil (13) an einer Stelle mit etwas Abstand weg vom Umfang des unteren Teils (13) angrenzen.

6. Offendach-Konstruktion gemäß Anspruch 5, wobei die Unterseite des Umfangsrandes des oberen Teils (12) im wesentlichen bündig mit der Unterseite des unteren Teils (13) ist.

7. Blende, insbesondere eine Sonneblende, zur Verwendung in einer Offendach-Konstruktion für ein Fahrzeug mit einer Öffnung in dessen Festdach, wobei die Blende in der Form einer verschiebbaren, im wesentlichen steifen Blende ist, welche mit mindestens einer Ventilationsöffnung zum Hindurchpassieren von Luft durch die Blende hindurch versehen ist und welche sich horizontal überlappende Abschnitte wenigstens benachbart zu der Ventilationsöffnung aufweist, **dadurch gekennzeichnet, dass** die Sonnenblende doppelwandig mit einem oberen Teil und einem unteren Teil ausgebildet ist, welche unterschiedliche Abmessungen haben und sich wenigstens teilweise zum Ausbilden der sich horizontal überlappenden Abschnitte überlappen, die eine Ventilationslücke benachbart zu der mindestens einen Ventilationsöffnung zum Verhindern eines direkten Lichteinfalls durch die Blende hindurch definieren.

8. Sonnenblende gemäß Anspruch 7, wobei die Oberseite der Blende im wesentlichen eben und frei von irgendwelchen aufwärts gerichteten Vorsprüngen ist.

## Revendications

1. Construction de toit ouvrant pour un véhicule ayant une ouverture dans son toit fixe (1), comprenant une partie stationnaire destinée à être fixée au toit, un élément supérieur de fermeture ajustable supporté par ladite partie stationnaire, qui peut être ajusté entre une position fermée dans laquelle il ferme l'ouverture de toit (2) et une position ouverte dans laquelle il ouvre l'ouverture de toit (2) au moins partiellement, ainsi qu'un élément inférieur de fermeture, en particulier un écran pare-soleil (9) sous forme d'un écran coulissant sensiblement rigide qui est muni d'au moins une ouverture de ventilation (14) pour laisser passer l'air à travers l'écran et qui comprend des parties qui se chevauchent horizontalement, au moins à côté de ladite ouverture de ventilation, **caractérisée en ce que** ledit écran comporte une double paroi avec une partie supérieure (12, 12') et une partie inférieure (13) qui ont des dimensions différentes et qui se chevauchent au moins partiellement pour former lesdites parties qui se chevauchent horizontalement définissant un espace de ventilation adjacent à ladite au moins une ouverture de ventilation (14) pour empêcher l'incidence directe de la lumière à travers l'écran.

2. Construction de toit ouvrant selon la revendication 1, dans laquelle ledit écran (9) comprend les parties qui se chevauchent au moins sensiblement sur toute sa longueur et/ou largeur et/ou dans laquelle les parties qui se chevauchent s'étendent en continu sans parties d'interruption et/ou dans laquelle la face inférieure de l'écran se fond dans la partie supérieure des parties qui se chevauchent.

3. Construction de toit ouvrant selon la revendication 2, dans laquelle lesdites parties qui se chevauchent s'étendent sur toute la circonférence de l'écran.

4. Construction de toit ouvrant selon la revendication 1, dans laquelle au moins une ouverture de ventilation (14) est présente à côté du bord avant et à côté du bord arrière de l'écran (9).

5. Construction de toit ouvrant selon l'une quelconque des revendications précédentes, dans laquelle ledit écran (9) comprend une partie supérieure (12) et une partie inférieure (13), dans laquelle ladite partie supérieure (12) est plus grande que ladite partie inférieure (13) et dans laquelle le bord circonférentiel de l'écran (9) est formé sur ladite partie supérieure (12) et ladite partie supérieure (12) est incurvée vers le haut à partir dudit bord circonférentiel, laissant libre un espace vertical entre elle et ladite partie inférieure (13), alors que les ouvertures de ventilation (14) sont présentes dans la partie supérieure (12), lesquelles ouvertures de ventilation (14) sont contiguës à l'espace entre ladite partie supérieure (12) et ladite partie inférieure (13) à un emplacement placé à une certaine distance de la circonférence de ladite partie inférieure (13).

6. Construction de toit ouvrant selon la revendication 5, dans laquelle la face inférieure du bord circonférentiel de la partie supérieure (12) est au moins sensiblement au même niveau que la face inférieure de la partie inférieure (13).

7. Ecran, en particulier écran pare-soleil, destiné à être utilisé dans une construction de toit ouvrant pour un véhicule ayant une ouverture dans son toit fixe ledit écran se présentant sous forme d'un écran coulissant sensiblement rigide qui est muni d'au moins une ouverture de ventilation pour laisser passer l'air à travers l'écran et qui comprend des parties qui se chevauchent horizontalement, au moins à côté de ladite ouverture de ventilation, **caractérisé en ce que** ledit écran comporte une double paroi avec une partie supérieure et une partie inférieure qui ont des dimensions différentes et qui se chevauchent au moins partiellement pour former lesdites parties qui se chevauchent horizontalement définissant un espace de ventilation adjacent à ladite au moins une ouverture de ventilation pour empêcher l'incidence directe de la lumière à travers l'écran.

8. Ecran pare-soleil selon la revendication 7, dans lequel la face supérieure de l'écran est sensiblement plate et exempte de toutes projections dirigées vers le haut.
